# EUROPÄISCHE PATENTANMELDUNG

(11) **EP 1 077 311 A1**
(43) Veröffentlichungstag der Anmeldung: **21.02.2001**
(21) Anmeldenummer: 99116235.5
(22) Anmeldetag: 17.08.1999
(51) Int. Cl.: F01D 5/18

(54) **Gekühlte Gasturbinenschaufel**

(71) Anmelder: SIEMENS AKTIENGESELLSCHAFT, 80333 München (DE)
(72) Erfinder: Bolms, Hans-Thomas, 45468 Mühlheim (DE); Scheurlen, Michael, 45470 Mühlheim (DE); Tiemann, Peter, 58452 Witten (DE)

(57) **Zusammenfassung**

Die Erfindung betrifft eine Gasturbinenschaufel (1) mit einem Hohlraum (20), bei der auf einer Innenseite (21) eine Außenwand (4) einer entlang einer Schaufelachse (2) gerichtete Kühlrippe (30) angeordnet ist, die in den Hohlraum (20) ragt. Durch die Kühlrippe 30 wird die Kühlung der Außenwand (4) durch im Hohlraum 20 strömendes Kühlfluid (40) verstärkt. Eine Filmkühlung der Gasturbinenschaufel (1) kann somit reduziert oder sogar ganz vermieden werden.

## Beschreibung

Die Erfindung betrifft eine, einen Hohlraum umschließende, eine Saugseite und Druckseite aufweisende Gasturbinenschaufel, die durch ein durch den Hohlraum führbares Kühlfluid kühlbar ist.

Eine gekühlte Gasturbinenschaufel geht aus der EP 0 758 932 B1 hervor. Die Gasturbinenschaufel wird bei Temperaturen nahe bei der für den Werkstoff der Turbinenschaufel maximal erlaubten Temperatur betrieben. Besonders heiß wird dabei die Schaufelvorderkante. Die Gasturbinenschaufel muß aus diesem Grund gekühlt werden. Zur Führung eines Kühlfluides ist die Gasturbinenschaufel hohl ausgebildet. Zur Verbesserung eines Wärmeübergangs zwischen dem Kühlfluid und der zu kühlenden Gasturbinenaußenwand sind an der Innenseite dieser Außenwand rippenförmiger Turbulatoren vorgesehen.

Aufgabe der Erfindung ist die Angabe einer Gasturbinenschaufel, die hinsichtlicher Ihrer Kühlbarkeit besonders günstige Eigenschaften aufweist.

Diese Aufgabe wird erfindungsgemäß gelöst durch Angabe einer entlang einer Schaufelachse gerichteten Gasturbinenschaufel mit einer einen Hohlraum umschließenden, eine Saugseite und eine Druckseite aufweisenden Außenwand, die eine an den Hohlraum angrenzende Innenseite aufweist, wobei eine im wesentlichen entlang der Schaufelachse gerichetete Kühlrippe, die eine erste Schmalseite und eine zweite Schmalseite aufweist, mit der ersten Schmalseite auf der Innenseite angeordnet ist, wobei die zweite Schmalseite freistehend im Hohlraum endet.

Durch eine solche hohle Gastrubinenschaufel wird im Betrieb ein Kühlfluid, vorzugsweise Kühlfluid, geleitet. Dieses Kühlfluid kühlt die Außenwand. Häufig wird das Kühlfluid durch Filmkühlbohrungen an der Saugseite und/oder der Druckseite des Schaufelblattes herausgeleitet, um die dem Heißgas ausgesetzte Außenseite der Außenwand durch Ausbildung eines Kühlfluidfilmes zu kühlen. Das Kühlfluid wird als Kühlluft in der Regel von einem Verdichter einer Gasturbine abgezweigt, in die die Gasturbinenschaufel eingebaut ist. Somit steht ein Teil der Verdichterluft nicht einer das Abgas erzeugenden und die Turbine antreibenden Verbrennung zur Verfügung, wodurch der Wirkungsgrad der Gasturbine sinkt. Kühlluft, die über Filmkühlbohrungen der Gasturbinenschaufel in den Heißgaskanal der Gasturbine eingeleitet wird, kann auch nicht mehr für weitere Kühlzwecke herangezogen werden. Eine geschlossene Kühlluftführung innerhalb der Gasturbinenschaufel, d.h. eine Abführung der Kühlluft ohne einen Auslaß in den Heißgaskanal trägt durch eine weitere Verwendung dieser Kühlluft zu erneuten Kühlzwecken zu einer Verminderung des Kühlluftverbrauches bei. Eine Kühlung alleine über das im Hohlraum strömende Kühlfluid, d. h. eine Kühlung alleine der Innenseite der Außenwand ohne eine Filmkühlung der Außenseite ist aber in der Regel nicht ausreichend, um die hohen thermischen Belastungen der Gasturbinenschaufel aufzufangen.

Mit der Erfindung wird ein ganz neuer Weg bei der Kühlung der Gasturbinenschaufelinnenseite und damit der Außenwand eingeschlagen. Durch die in den Hohlraum ragende Kühlrippe wird die effektive Kühlfläche der Innenseite vergrößert. Durch die beidseitige Umströmung der Kühlrippe durch das im Hohlraum strömende Kühlfluid wird die Kühlrippe sehr effizient gekühlt. Durch Wärmeleitung wird Wärme aus der Außenwand über die Kühlrippe als Wärmesenke abgeführt. Die Verringerung des effektiven Strömungsquerschnittes des Hohlraums durch die in den Hohlraum hineinragende Kühlrippe läßt dieses Konzept zunächst abwegig erscheinen, da die entstehenden Kühlfluiddruckverluste gerade einen erhöhten Kühlfluidbedarf und somit einen verschlechterten Wirkungsgrad der Gasturbine zur Folge haben. Der Erfindung liegt aber die Erkenntnis zugrunde, daß durch die Kühlrippe eine so weit verbesserte Kühlung der Außenwand erfolgt, daß diese Druckverluste mehr als wettgemacht werden. Die Kühlrippe kann dabei die Kühlung der Außenwand sogar soweit verbessern, daß zumindest auf einen Teil von Filmkühlbohrungen verzichtet werden kann. Somit kann zumindest ein Teil des der Gasturbinenschaufel zugeführten Kühlmediums wieder kontrolliert aus dieser abgeführt und einer weiteren Kühlaufgabe zugeleitet werden.

Vorzugsweise sind im Hohlraum eine erste und eine zweite, jeweils die Saugseite mit der Druckseite verbindende Stützrippe angeordnet, wobei die Kühlrippe zwischen der ersten und zweiten Stützrippe angeordnet ist. Die Stützrippe durchquert also den Hohlraum und verbindet - die Außenwand versteifend - die Saugseite mit der Druckseite. Der Hohlraum wird durch die Stützrippen in Teilhohlräume zerlegt, die als Kühlfluidführungskanäle dienen. Typischerweise wird das Kühlfluid serpentinenartig nacheinander durch die Teilhohlräume geführt. Im Bereich der Stützrippen ergibt sich eine effektive Kühlung der Außenwand, da die Stützrippen durch das Kühlfluid effektiv gekühlt werden und durch Wärmeleitung Wärme aus der Außenwand abführen. Die Kühlrippe wird nun zwischen der ersten und zweiten Stützrippe angeordnet, um einen von den Stützrippen entfernten Bereich der Außenwand so zu kühlen, daß auch in diesem Bereich keine unzulässig hohe Erwärmung der Außenwand erfolgt. Dabei ist die Kühlrippe in ihrer Art völlig verschieden von den Stützrippen, da sie weder einer mechanischen Versteifung noch einer Kanalbildung für das Kühlfluid dient. Vorzugsweise sind weitere Kühlrippen so angeordnet, daß an keiner Stelle der Außenwand eine unzulässig hohe Erwärmung auftritt.

Bevorzugt sind auf der Innenseite Turbulatoren zur Turbulenzerzeugung im Kühlmedium angeordnet. Solche Turbulatoren sind in der Regel als etwa quer zur Schaufelachse verlaufende, kantenartige Vorsprünge ausgebildet, die zu einer Verwirbelung des an ihnen vorbeiströmenden Kühlmediums führen. Durch eine solche Verwirbelung wird ein besserer Wärmeübergang an der Außenwand zum Kühlmedium bewirkt. Weiter bevorzugt sind auch auf der Kühlrippe Turbulatoren zur Turbulenzerzeugung angeordnet. Dadurch ergibt sich eine weitere Verbesserung der Kühlung der Kühlrippe. Die Kühlrippe kann somit unter Umständen kleiner ausgeführt werden.

Vorzugsweise ist eine Dicke der Kühlrippe so ausgelegt, daß sich eine bei Nennbetrieb der Gasturbinenschaufel ausreichende Kühlwirkung für einen durch die Kühlrippe kühlbaren Bereich der Außenwand ergibt. Bevorzugtermaßen ist eine von der ersten zur zweiten Schmalseite gemessene Breite der Kühlrippe so ausgelegt, daß sich eine bei Nennbetrieb der Gasturbinenschaufel ausreichende Kühlwirkung für einen durch die Kühlrippe kühlbaren Bereich der Kühlrippe ergibt. Durch die gezielte Abstimmung der Kühlrippenmaße, also ihre Dicke oder ihre Breite mit der sie in den Hohlraum ragt, führt zu einer gerade soweit gestalteten Kühlung der Außenwand, daß diese mit ihrer Erwärmung in einem zulässigen Bereich bleibt. Gleichzeitig wird durch die Kühlrippe nicht unnötigerweise der Hohlraum verkleinert, d. h. der Strömungswiderstand für das durch den Hohlraum strömende Kühlfluid erhöht.

Bevorzugtermaßen ist die Kühlrippe in einem bei Nennbetrieb thermisch am höchsten belasteten Bereich angeordnet. Unter Umständen reicht es aus, eine Kühlrippe nur im thermisch am höchsten belasteten Bereich anzuordnen.

Vorzugsweise ist die Gasturbinenschaufel als eine Leitschaufel oder als eine Laufschaufel ausgeführt. Weiter bevorzugt ist die Gasturbinenschaufel für eine stationäre Gasturbine ausgelegt. Bei stationären Gasturbinen können die Gasturbinenschaufeln erhebliche Ausdehnungen aufweisen. Gegenüber Gasturbinenschaufeln von z.B. Flugtriebwerken, können somit erheblich ausgedehnte Bereiche der Außenwand ohne Einwirkung der kühlenden Wirkung von Stützrippen verbleiben. Es ist somit gerade für die großen Gasturbinenschaufeln stationärer Gasturbinen vorteilhaft, separate Kühlrippen auf der Innenseite der Außenwand anzuordnen.

Vorzugsweise weist die Gasturbinenschaufel auf ihrer Außenwand eine Oxidations-/Korrosionsschutzschicht und/oder eine keramische Wärmedämmschicht auf. Bei Gasturbinenschaufeln mit einer solchen Beschichtung sind Filmkühlbohrungen in ihrer Fertigung besonders aufwendig. Auch bei einem Neubeschichten (Refurbishment) von Gasturbinenschaufeln bereiten Filmkühlbohrungen fertigungstechnische Probleme. Die Verringerung oder gar Einsparung dieser Filmkühlbohrungen durch eine verstärkte Innenkühlung mit Hilfe der Kühlrippe ist hier somit besonders vorteilhaft.

Die Erfindung wird im Ausführungsbeispiel anhand der Zeichnung näher erläutert. Es zeigen teilweise schematisch und nicht maßstäblich:
- FIG 1: eine Ansicht einer Gasturbinenschaufel,
- FIG 2: einen Querschnitt durch eine Gasturbinenschaufel,
- FIG 3: einen Ausschnitt eines Querschnittes einer Gasturbinenschaufel,
- FIG 4: eine Temperaturverteilung in der Außenwand einer Gasturbinenschaufel und
- FIG 5: eine Aufsicht auf einen Teil einer Innenseite der Außenwand einer Gasturbinenschaufel.

Gleiche Bezugszeichen haben in den verschiedenen Figuren die gleiche Bedeutung.

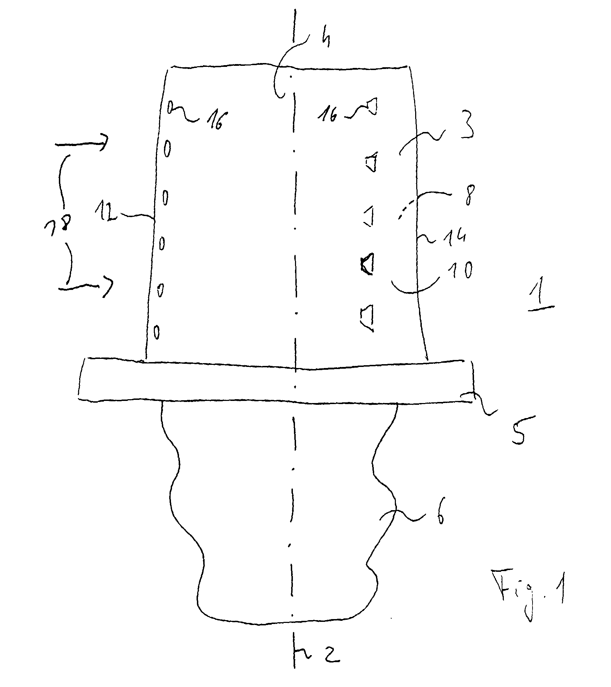

FIG 1 zeigt in einer Ansicht eine Gasturbinenschaufel 1. Die Gasturbinenschaufel 1 weist entlang einer Schaufelachse 2 aufeinanderfolgend ein Schaufelblatt 3, einen Plattformbereich 5 und einen Befestigungsbereich 6 auf. Der Schaufelblattbereich 3 weist eine Außenwand 4 auf. Die Außenwand 4 weist eine Druckseite 8 und eine Saugseite 10 auf. Zwischen der Druckseite 8 und der Saugseite 10 liegen entlang der Schaufelachse 2 eine Schaufeleintrittskante 12 und eine Abströmkante 14. Durch die Außenwand 4 führen Filmkühlbohrungen 16 zur Durchleitung von Kühlluft an die Außenseite de Außenwand 4. Die Gasturbinenschaufel 1 wird im Betrieb einer hohen thermischen Belastung durch ein sie umströmendes Heißgas 18 ausgesetzt. Um dieser hohen thermischen Belastung zu widerstehen wird durch das Innere der Gasturbinenschaufel 1 Kühlluft geführt. Über die Filmkühlbohrungen 16 tritt diese Kühlluft aus der Gasturbinenschaufel 1 aus und bildet einen das Heißgas 18 abschirmenden Kühlfilm. Die innere Kühlstruktur der Gasturbinenschaufel 1 wird anhand der folgenden Figuren näher erläutert.

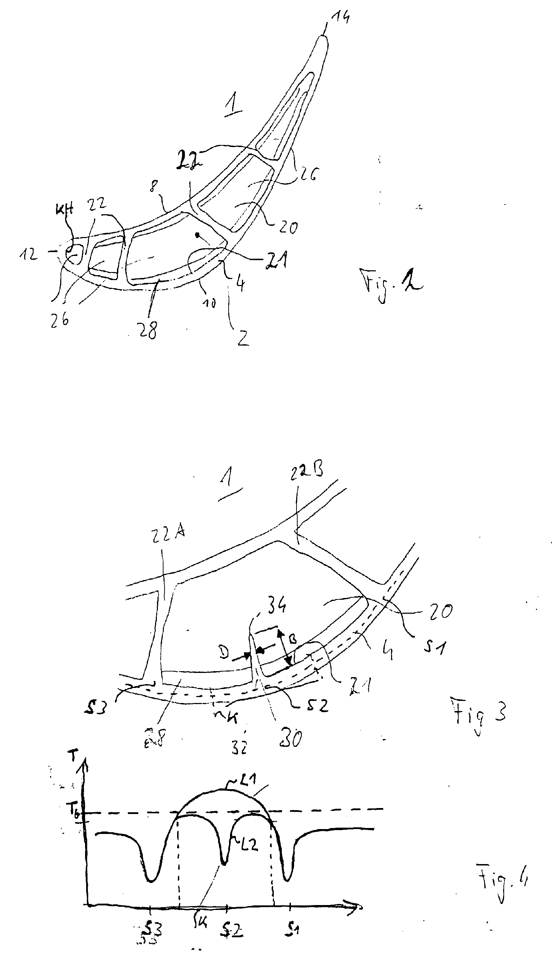

FIG 2 zeigt einen Querschnitt durch eine Gasturbinenschaufel 1 die gemäß dem Stand der Technik ausgeführt ist. Die Außenwand 4 umschließt einen Hohlraum 20. Dem Hohlraum 20 ist eine Innenseite 21 der Außenwand 4 benachbart. Der Hohlraum 20 wird durch vier Stützrippen 22 in Teilhohlräume 26 unterteilt, die einer Versteifung der Außenwand 4 und einer Kanalbildung für eine serpentinenartige Führung von Kühlluft durch den Hohlraum 20 dienen. Auf der Innenseite 21 sind quer zur Schaufelachse 2 kanten- oder vorsprungartige Turbulatoren 28 angeordnet, die durch den Hohlraum 20 strömende Kühlluft verwirbeln und somit den Wärmeübergang zwischen Außenwand 4 und der Kühlluft verbessern. Eine Weiterentwicklung dieser Gasturbinenschaufel 1 zeigt FIG 3.

In FIG 3 ist eine Ausführung eines Querschnittes durch eine Gasturbinenschaufel 1 dargestellt. Zwischen einer ersten Stützrippe 22a und einer zweiten Stützrippe 22b ist auf der Innenseite 21 eine Kühlrippe 30 angeordnet. Die Kühlrippe 30 weist eine erste Schmalseite 32 und eine zweite Schmalseite 34 auf. Die Kühlrippe 30 ist mit der ersten Schmalseite 32 mit der Innenseite 21, also mit der Außenwand 4 verbunden, während die zweite Schmalseite 34 freistehend in den Hohlraum 20 ragt. Die Kühlrippe 30 weist eine quer zur Schaufelachse 2 gemessene Dicke D auf. Die Kühlrippe 30 weist eine von der ersten Schmalseite 32 zur zweiten Schmalseite 34 gemessene Breite B auf. Durch die Kühlrippe 30 wird ein Kühlbereich K der Außenwand 4 durch im Hohlraum strömendes Kühlfluid wirksam gekühlt. Die Kühlrippe 30 erzeugt durch eine Oberflächenvergrößerung der Innenseite 21 eine Wärmesenke, in die durch Wärmeleitung Wärme aus der Außenwand 4 abgeführt wird. Durch die Stützrippen 22a und 22b erfolgt ebenfalls in einem bestimmten Bereich eine Kühlung der Außenwand 4. Die Stützrippen 22a, 22b sind aber durch ihre für die Außenwand 4 versteifende Funktion und durch ihre kanalbildende Funktion für das Kühlfluid in ihrer Art gänzlich verschieden, von der Kühlrippe 30, die einzig der Kühlung der Außenwand 4 dient. Die Kühlrippe 30 ist dabei mit ihrer Dicke D und Breite B sowie mit ihrer Position an der Innenseite 21 so ausgewählt, daß sich eine effektive Kühlung der Außenwand 4 ergibt, ohne daß durch die Kühlrippe 30 eine unnötige Querschnittsverängung des Hohlraumes 20 erfolgen würde. Die entlang der saugseitigen Außenwand 4 gemessenen Positionen der Stützrippen 22a, 22b sind S3 bzw. S1 bezeichnet. Die Position der Kühlrippe 30 ist mit S2 bezeichnet.

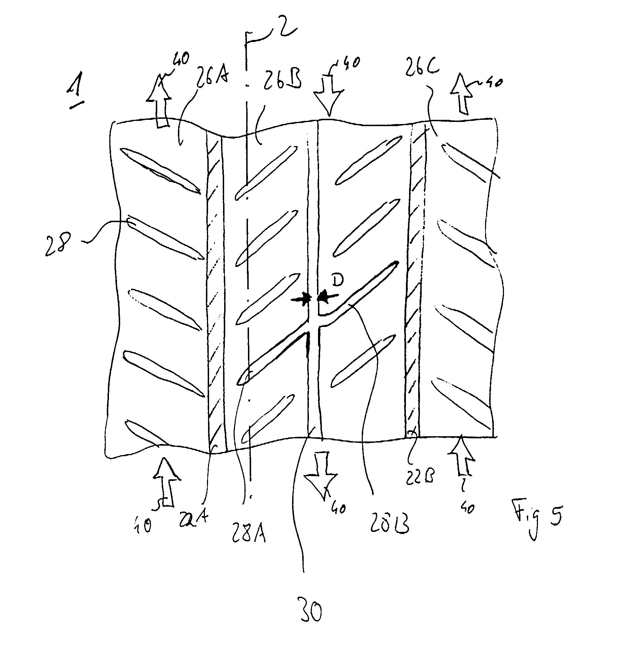

In FIG 4 ist ein Temperaturverlauf entlang der Saugseite 10 der Außenwand 4 dargestellt. Mit L1 ist dabei ein Temperaturverlauf ohne eine Kühlrippe 30 und mit L2 ein Temperaturverlauf mit einer Kühlrippe 30 bezeichnet. Mit gestrichelter Linie ist eine Grenztemperatur TG eingezeichnet, die eine maximal für die Außenwand 4 zulässige Temperatur darstellt. Man erkennt, daß an den Positionen S3, S1 der Stützrippen 22a, 22b deutliche Temperaturminima vorliegen, die aus der Wärmeabfuhr aus der Außenwand 4 durch die gekühlten Stützrippen 22a, 22b resultiert. Im Temperaturverlauf L1, also ohne Kühlrippe 30, überschreitet die Temperatur in einem Bereich zwischen den Stützrippen 22a, 22b die Grenztemperatur TG. Durch die Kühlwirkung der Kühlrippe 30 wird gemäß dem Temperaturverlauf L2 eine Position S2 ein weiteres Temperaturminimum erzeugt, wodurch die Temperatur an jeder Stelle der Saugseite 10 der Außenwand 4 unterhalb der Grenztemperatur TG bleibt. Durch gezielte Anordnung und Auslegung solcher Kühlrippen 30 kann unter Umständen sogar völlig auf eine Filmkühlung der Gasturbinenschaufel 1 verzichtet werden.

FIG 5 zeigt einen Ausschnitt eines Längsschnittes durch eine Gasturbinenschaufel 1. Stützrippen 22a, 22b unterteilen den Hohlraum 20 in Teilhohlräume 26a, 26b, 26c. Eine Kühlrippe 30 ist im Teilhohlraum 26b zwischen der ersten Stützrippe 22a und der zweiten Stützrippe 22b angeordnet. Kühlfluid 40 wird serpentinenartig durch die Teilhohlräume 26a, 26b, 26c geleitet. Turbulatoren 28 sind dabei in den jeweiligen Teilhohlräumen 26a, 26b, 26c so geneigt, daß eine Strömungskomponente für das Kühlfluid 40 in Richtung auf eine thermisch höher belastete Seite, also in Richtung auf die Schaufeleintrittskante 12 erfolgt. Auch angrenzend zur Kühlrippe 30 verlaufen Turbulatoren 28. Ein Turbulator 28a ist beispielhaft so ausgeführt, daß er in die Kühlrippe 30 übergeht. Ein weiterer Turbulator 28b geht ebenfalls in die Kühlrippe 30 über, biegt aber in Bereich des Übergangs senkrecht zur Kühlrippe 30 ab, so daß sich etwa bei einem Gießen der Gasturbinenschaufel 1 keine unsymmetrischen Verdickungen in diesem Übergangsbereich ergeben, die thermische Spannungen zur Folge hätten.

## Patentansprüche

1. Entlang einer Schaufelachse (2) gerichtete Gasturbinenschaufel (1) mit einer einen Hohlraum (20) umschließenden, eine Saugseite (10) und eine Druckseite (8) aufweisenden Außenwand (4), die eine an den Hohlraum (20) angrenzende Innenseite (21) aufweist,
**dadurch gekennzeichnet**, daß
eine im wesentlichen entlang der Schaufelachse (2) gerichtete Kühlrippe (30), die eine erste Schmalseite (32) und eine zweite Schmalseite (34) aufweist, mit der ersten Schmalseite (32) auf der Innenseite(21) angeordnet ist, wobei die zweite Schmalseite (34) freistehend im Hohlraum (20) endet.

2. Gasturbinenschaufel (1) nach Anspruch 1,
die eine erste und eine zweite, jeweils im Hohlraum (20) angeordnete, die Saugseite (10) mit der Druckseite (8) verbindende Stützrippe (22) aufweist,
**dadurch gekennzeichnet**, daß die Kühlrippe (30) zwischen der ersten und zweiten Stützrippe (22) angeordnet ist.

3. Gasturbinenschaufel (1) nach Anspruch 1 oder 2,
**dadurch gekennzeichnet,** daß
auf der Innenseite (21) Turbulatoren (28) zur Turbulenzerzeugung in einem, durch den Hohlraum (20) strömendem Kühlmedium (40) erzeugbar sind.

4. Gasturbinenschaufel (1) nach Anspruch 1, 2 oder 3,
**dadurch gekennzeichnet**, daß
auf der Kühlrippe (30) Turbulatoren (28) zur Turbulenzerzeugung in einem, durch den Hohlraum (20) strömendem Kühlmedium (40) erzeugbar sind.

5. Gasturbinenschaufel (1) nach einem der vorhergehenden Ansprüche, **dadurch gekennzeichnet** daß
eine Dicke (D) der Kühlrippe (30) so ausgelegt ist, daß sich eine bei Nennbetrieb der Gasturbinenschaufel (1) ausreichende Kühlwirkung für einen durch die Kühlrippe (30) kühlbaren Kühlbereich (K) der Außenwand (4) ergibt.

6. Gasturbinenschaufel (1) nach einem der vorhergehenden Ansprüche, **dadurch gekennzeichnet**, daß
eine von der ersten Schmalseite (32) zur zweiten Schmalseite (34) gemessene Breite (B) der Kühlrippe (3) so ausgelegt ist, daß sich eine bei Nennbetrieb der Gasturbinenschaufel (1) ausreichende Kühlwirkung für einen durch die Kühlrippe (30) kühlbaren Kühlbereich (K) der Außenwand (4) ergibt.

7. Gasturbinenschaufel (1) nach einem der vorhergehenden Ansprüche, **dadurch gekennzeichnet**, daß
die Kühlrippe (30) in einem bei Nennbetrieb thermisch am höchsten belasteten Kühlbereich (K) angeordnet ist.

8. Gasturbinenschaufel (1) nach einem der vorhergehenden Ansprüche,
die als Leitschaufel ausgeführt ist.

9. Gasturbinenschaufel (1) nach einem der vorhergehenden Ansprüche,
die als Laufschaufel ausgeführt ist.

10. Gasturbinenschaufel (1) nach einem der vorhergehenden Ansprüche,
die für eine stationäre Gasturbine ausgelegt ist.
